**Europäisches Patentamt**

**European Patent Office**

**Office européen des brevets**

(11) Numéro de publication : **0 508 883 A1**

(19)

# DEMANDE DE BREVET EUROPEEN

(12)

(21) Numéro de dépôt : **92400966.5**

(22) Date de dépôt : **07.04.92**

(51) Int. Cl.⁵ : **H04M 1/60**

(30) Priorité : **10.04.91 FR 9104354**

(43) Date de publication de la demande :
**14.10.92 Bulletin 92/42**

(84) Etats contractants désignés :
**BE DE ES GB IT NL PT SE**

(71) Demandeur : **MATRA COMMUNICATION**
**50, rue du Président Sadate Creac'h Gwenn**
**F-29101 Quimper (FR)**

(72) Inventeur : **Robbe, Michel**
**36bis, rue du Maréchal Maunoury**
**F-78700 Conflans Sainte-Honorine (FR)**

(74) Mandataire : **Fruchard, Guy et al**
**CABINET BOETTCHER 23, rue la Boétie**
**F-75008 Paris (FR)**

(54) **Circuit de commande d'une écoute amplifiée d'un poste téléphonique.**

(57)    Le circuit comporte une bascule (6) du type comprenant une partie maître (7) et une partie esclave (8) associées et ayant des entrées de changement d'état reliées à un organe de détection (4) d'une commande de prise de ligne directe (1) et d'une commande de prise de ligne sans décrocher (2) dans laquelle la partie esclave (8) de la bascule comporte une entrée de remise à zéro (23) reliée à la commande de prise de ligne directe (1).

**EP 0 508 883 A1**

La présente invention concerne un circuit de commande d'une écoute amplifiée d'un poste téléphonique.

On sait que les postes téléphoniques comportent de plus en plus fréquemment une écoute amplifiée pouvant s'ajouter à l'écouteur du combiné pour permettre à plusieurs personnes de suivre une conversation téléphonique. Il est bien entendu nécessaire de pouvoir commander l'interruption de l'écoute amplifiée dans le cas où l'on souhaite garder un caractère confidentiel à une conversation téléphonique.

Les postes téléphoniques équipés d'une écoute amplifiée comportent donc également un circuit de commande de cette écoute amplifiée.

Par ailleurs, les postes modernes offrent très souvent la possibilité de prendre une ligne de façon directe c'est-à-dire en saisissant le combiné, ou de prendre une ligne sans décrocher. Dans le cas d'une prise de ligne sans décrocher, il est nécessaire de démarrer la communication avec une écoute amplifiée afin que l'utilisateur du poste téléphonique puisse suivre le déroulement de son appel. Afin de minimiser le nombre de composants utilisés pour un poste téléphonique, on a cherché à utiliser la même touche du poste pour commander à la fois la prise de ligne sans décrocher et l'écoute amplifiée après une prise de ligne. Pour celà on utilise une bascule du type comprenant une partie maître et une partie esclave associées et ayant des entrées de changement d'état reliées à un organe de détection d'une commande de prise de ligne directe et d'une commande de prise de ligne sans décrocher, la partie maître et la partie esclave comportant généralement par ailleurs une entrée de remise à zéro reliée à une ligne de commande commune. En règle générale, l'entrée commune de remise à zéro est reliée à la commande de prise de ligne directe afin de couper l'écoute amplifiée lorsque l'on effectue la prise directe, c'est-à-dire lorsque l'on saisit le combiné. Un problème s'est révélé lorsque l'on utilise tout d'abord la commande de prise de ligne sans décrocher et que l'on effectue dans un délai très bref une prise de ligne directe. Dans ce cas la bascule de type maître-esclave se trouve en effet soumise à deux instructions contradictoires l'une visant à établir l'écoute amplifiée et l'autre visant à remettre la bascule à zéro, c'est-à-dire à supprimer l'écoute amplifiée.

L'ordre dans lequel ces instructions arrivent à la bascule dépend de la vitesse de basculement des circuits logiques disposés en amont de la bascule et il en résulte donc un fonctionnement aléatoire qui n'est pas satisfaisant pour les utilisateurs.

Lorsque le circuit de commande est réalisé au moyen de composants discrets, il est aisé de prévoir un circuit retardateur sur la ligne de remise à zéro afin de s'assurer que cette instruction de remise à zéro parvient toujours à la bascule après l'instruction de prise de ligne sans décrocher. Dans le cas de circuits intégrés, la réalisation d'une boucle de retard est proportionnellement plus onéreuse et on cherche donc à éviter celle-ci.

Pour celà, on propose selon l'invention un circuit de commande d'une écoute amplifiée d'un poste téléphonique comportant une bascule du type comprenant une partie maître et une partie esclave associées et ayant des entrées de changement d'état reliées à un organe de détection d'une commande de prise de ligne directe et d'une commande de prise de ligne sans décrocher, dans lequel la partie esclave de la bascule comporte une entrée de remise à zéro reliée à la commande de prise de ligne directe. Ainsi, on remet à zéro la partie esclave seulement de la bascule du type maître-esclave de sorte que la commande d'écoute amplifiée ne se trouve pas modifiée avant que l'instruction résultant de la commande de prise de ligne sans décrocher ne se soit parvenue à la bascule.

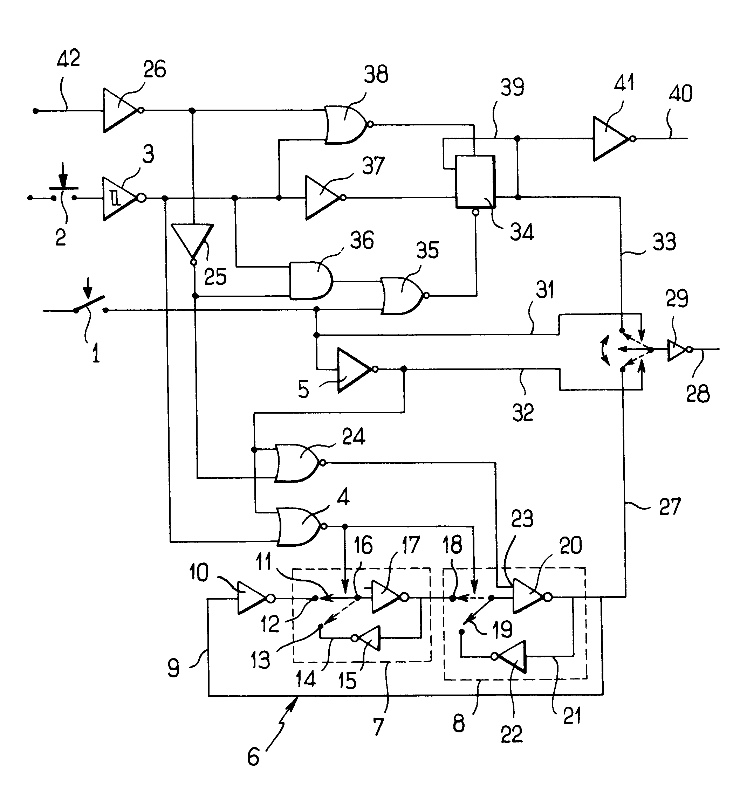

D'autres caractéristiques et avantages de l'invention apparaîtront à la lecture de la description qui suit d'un mode de réalisation particulier non limitatif de l'invention en liaison avec la figure unique ci-jointe illustrant de façon schématique un circuit de commande d'écoute amplifiée incluant l'invention.

En référence à la figure, le circuit de commande comprend un organe de prise de ligne directe 1, par exemple un interrupteur mécanique associé au combiné du poste téléphonique, et un organe de prise de ligne sans décrocher 2, par exemple un bouton poussoir associé à une bascule de Schmitt inversée 3. Le circuit de commande illustré comporte également une ligne de remise à zéro 42 servant uniquement lors de l'alimentation initiale du poste téléphonique.

L'organe de prise directe 1 est relié à une entrée d'un organe de détection de prise de ligne formé dans le mode de réalisation illustré par une cellule NON OU 4 par l'intermédiaire d'une cellule NON 5. La seconde entrée de la cellule NON OU 4 est reliée à l'organe de commande de prise de ligne sans décrocher. La sortie de la cellule NON OU 4 est reliée aux entrées de changement d'état d'une bascule généralement désignée en 6 et comportant une partie maître généralement désignée en 7 et une partie esclave généralement désignée en 8, associées par une boucle de retour 9 comportant une cellule NON 10. La partie maître 7 comporte un organe de changement d'état 11 adapté à effectuer alternativement une liaison entre une borne 12 reliée à la sortie de la cellule NON 10 ou une borne 13 associée à une boucle de rétroaction 14 comprenant une cellule NON 15, et une borne 16 associée à l'entrée d'une cellule NON 17 dont la sortie est reliée d'une part à la boucle de rétroaction 14 et d'autre part à l'entrée 18 de la partie esclave 8. La partie esclave comporte un organe de changement d'état 19 disposé pour effectuer une liaison entre une première entrée d'une cellule NON ET 20 et la borne d'entrée 18 ou la borne d'une boucle de rétroaction 21 comportant une cellule NON 22. L'organe de changement d'état 19 est commandé pour être constamment dans une position inverse de l'organe de changement d'état 11. La cellule NON ET 20 a sa sortie également reliée à la boucle de retour 9. La cellule NON ET 20 comporte une seconde entrée 23 reliée à une cellule NON OU 24 ayant une première entrée reliée à la sortie de la cellule NON 5 et une seconde entrée reliée à la sortie d'une cellule NON 25 elle-même reliée à la sortie d'une cellule NON 26 du circuit de remise à zéro 42.

La sortie de la bascule 6 est reliée par une ligne 27 à la ligne de sortie de commande de l'écoute amplifiée 28 par l'intermédiaire d'une cellule NON 29 et d'un organe d'aiguillage 30 commandé par l'état de l'organe de prise de ligne directe au moyen de lignes d'entrée dont l'une 31 est reliée directement à l'organe de commande de prise de ligne directe et dont l'autre 32 est reliée à la cellule NON 5. L'organe d'aiguillage 30 assure la liaison entre la ligne 28 et la ligne 27 ou entre la ligne 28 et une ligne de sortie 33 d'une bascule FLIP FLOP 34 comportant une entrée de remise à zéro reliée à une cellule NON OU 35 ayant une première entrée reliée à l'organe de commande de prise de ligne directe et une seconde entrée reliée à une cellule ET 36. La cellule ET 36 a une première entrée reliée à la sortie de la cellule NON 25 et une seconde entrée reliée à la sortie de la bascule de Schmitt inversée 3. La bascule 34 a une entrée de changement d'état reliée à une cellule NON 37 dont l'entrée est reliée à la sortie de la bascule de Schmitt inversée 3. La bascule FLIP FLOP 34 est également reliée à une cellule NON OU 38 ayant une entrée reliée à la sortie de la cellule NON 26 et une entrée reliée à la sortie de la bascule de Schmitt inversée 3. La bascule 34 comporte enfin une boucle de réaction 39 reliée à une ligne de sortie de commande d'inhibition microphone 40 par l'intermédiaire d'une cellule NON 41.

Le fonctionnement du circuit de commande selon l'invention est le suivant : l'alimentation du poste téléphonique étant supposée effectuée, la ligne de remise à zéro 42 est à l'état zéro et aucune prise de ligne n'étant effectuée, les lignes d'entrée des organes de commande de prise de ligne directe et sans décrocher sont également à l'état zéro. La sortie de la cellule NON 5 est donc à l'état un et l'organe d'aiguillage 30 assure une liaison de la ligne 28 avec la ligne 33. Lorsqu'on effectue une prise de ligne sans décrocher, la sortie de la bascule de Schmitt inversée 3 passe à l'état zéro tandis que la sortie de la cellule NON 5 reste à l'état un de sorte que la sortie de la cellule NON OU 4 reste à zéro.

Parallèlement, la sortie de la cellule NON 37 passe à un et envoie donc un ordre de changement d'état à la bascule 34 qui envoie un ordre de mise en route de l'écoute amplifiée sur la ligne de commande d'écoute amplifiée 28 et un ordre d'inhibition microphone sur la ligne de sortie 40. Au moment où l'on effectue une prise de ligne directe par l'organe de commande de prise de ligne directe, la sortie de l'organe de commande 1 passe à l'état un et la sortie de cellule NON 5 passe à l'état zéro de sorte que la connexion de l'aiguillage 30 bascule sur la liaison entre la ligne 28 et la ligne 27. Simultanément, la cellule NON OU 35 passe à l'état zéro et la bascule FLIP FLOP 34 est remise à zéro ce qui provoque l'arrêt de l'inhibition microphone sur la ligne 40. Parallèlement, les sorties des cellules NON OU 4 et 24 passent à l'état un de sorte que la bascule 6 est simultanément soumise à un ordre de changement d'état et à une remise à zéro. Cette remise à zéro étant effectuée seulement sur la partie esclave de la bascule 6 n'interfère pas avec le changement d'état de sorte que la ligne de sortie 27 est à l'état zéro. La sortie de commande d'écoute amplifiée 28 reste donc à l'état un et maintient l'écoute amplifiée.

Lors d'une manoeuvre ultérieure de l'organe de commande de prise de ligne sans décrocher 2, la sortie de la bascule de Schmitt inversée 3 repasse à l'état un ce qui provoque un changement de l'état de sortie de la cellule NON OU 4 et un changement d'état de la bascule 6. L'écoute amplifiée est alors interrompue. L'organe de commande de prise de ligne sans décrocher assure donc simultanément la fonction de commutateur alternatif pour l'écoute amplifiée.

Bien entendu l'invention n'est pas limitée au mode de réalisation décrit et on peut y apporter des variantes de réalisation sans sortir du cadre de l'invention. En particulier l'invention s'applique à des bascules du type maître-esclave ayant une configuration différente de celle illustrée. On peut également prévoir de couper systématiquement l'écoute amplifiée au moment de la prise de ligne directe, cette coupure se fera alors par un circuit parallèle, la remise à zéro de la bascule 6 étant de toutes façons effectuée sur la partie esclave 8 seulement pour que le fonctionnement de cette bascule ne devienne pas aléatoire.

## Revendications

1. Circuit de commande d'une écoute amplifiée d'un poste téléphonique comportant une bascule (6) du type comprenant une partie maître (7) et une partie esclave (8) associées et ayant des entrées de changement d'état reliées à un organe de détection (4) d'une commande de prise de ligne directe (1) et d'une commande de prise de ligne sans décrocher (2) caractérisé en ce que la partie esclave (8) de la bascule comporte une entrée de remise à zéro (23) reliée à la commande de prise de ligne directe (1).

EP 0 508 883 A1

4

Office européen
des brevets

# RAPPORT DE RECHERCHE EUROPEENNE

Numero de la demande

EP  92 40 0966

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 278 429 (NIXDORF COMPUTER) <br> * colonne 3, ligne 49 - colonne 8, ligne 33; figures 1-3 * <br> --- | 1 | H04M1/60 |
| A | DE-A-3 545 150 (KRONE A.G.) <br> * colonne 4, ligne 12 - colonne 6, ligne 35; figures 1,2 * <br> --- | 1 | |
| A | DE-A-3 329 476 (TELEFONBAU UND NORMALZEIT GMBH) <br> * page 6 - page 7; figures 1,2 * <br> --- | 1 | |
| A | DE-A-3 120 318 (SIEMENS A.G.) <br> * page 3, ligne 25 - page 6, ligne 9 * <br> --- | 1 | |
| A | EP-A-0 285 749 (TELEFONBAU UND NORMALZEIT GMBH) <br> * colonne 5, ligne 55 - colonne 7, ligne 33; figures 1,2 * <br> --- | 1 | |
| A | DE-A-3 623 017 (TELEFONBAU UND NORMALZEIT GMBH) <br> * colonne 2, ligne 57 - colonne 4, ligne 6; figures 1,2 * <br> ----- | 1 | **DOMAINES TECHNIQUES RECHERCHES (Int. Cl.5 )** <br><br> H04M |

Le présent rapport a été établi pour toutes les revendications

| Lieu de la recherche | Date d'achèvement de la recherche | Examinateur |
|---|---|---|
| LA HAYE | 07 JUILLET 1992 | DELANGUE P.C.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................
& : membre de la même famille, document correspondant

EPO FORM 1503 03.82 (P0402)